# EUROPÄISCHE PATENTSCHRIFT

(11) **EP 2 455 307 B1**
(45) Veröffentlichungstag und Bekanntmachung des Hinweises auf die Patenterteilung: **05.06.2013**
(21) Anmeldenummer: 11189991.0
(22) Anmeldetag: 21.11.2011
(51) Int. Cl.: B65G 13/07, B65G 21/00

(54) **Eingriffsschutz für Rollenförderer**
Interference prevention for roller transporter
Dispositif de protection pour transporteur de rouleaux

(30) Priorität: 19.11.2010 DE 202010015597 U
(43) Veröffentlichungstag der Anmeldung: 23.05.2012
(73) Patentinhaber: Interroll Holding AG, 6592 Sant' Antonino (CH)
(72) Erfinder:
(74) Vertreter: Eisenführ, Speiser & Partner

(56) Entgegenhaltungen:
- DE-A1- 4 211 874
- DE-U1- 8 707 989
- US-B1- 7 882 944

## Beschreibung

Die Erfindung betrifft eine Eingriffsschutzvorrichtung zur Positionierung zwischen dem Ober- und Untertrum eines Treibriemens für Transportrollen eines Rollenförderers.

Mit der Erfindung wird ein Ausrüstungsteil für Rollenförderer bereitgestellt. Rollenförderer sind Förderstrecken, bei denen mehrere sich quer zur Förderrichtung erstreckende Förderrollen in Förderrichtung hintereinander angeordnet sind und auf diese Weise eine obere Auflagefläche definieren. Die Förderrollen werden hierbei zwischen zwei Seitenprofilen montiert, indem die Achsen in diesen Seitenprofilen befestigt werden.

Rollenförderer können als funktionell passive Förderstrecken ohne jede Antriebsfunktion für das Fördergut und als angetriebene Förderstrecken ausgeführt sein. Bei angetriebenen Rollenförderern werden die Förderrollen angetrieben, um das darauf aufliegende Fördergut in Förderrichtung zu transportieren, indem die Förderrollen sich drehen. Hierbei besteht eine bewährte Antriebsweise darin, dass in Abständen in dem Rollenförderer motorgetriebene Rollen eingesetzt werden, die beispielsweise einen innenliegenden Elektroantrieb aufweisen und unter Drehmomentabstützung gegen das Seitenprofil die Umfangsfläche der Motorrolle in Rotation bringen. Es ist weiterhin bekannt, von solchen motorbetriebenen Förderrollen mittels seitlich an diesen Motorrollen angeordneten Transmissionsriemen andere, nicht angetriebene Rollen, sogenannte Leerlaufrollen, anzutreiben. Hierbei kann beispielsweise in einer direkten Transmissionsübertragung zwischen zwei benachbarten Rollen mit einem Transmissionsriemen unter einem Umschlingungswinkel von 180° an jeder Rolle die Rotation von einer motorbetriebenen Rolle auf eine Leerlaufrolle übertragen werden und dann mittels eines weiteren Transmissionsriemen von dieser Leerlaufrolle auf eine hierzu benachbarte weitere Leerlaufrolle übertragen werden und so weiter.

Rollenförderer werden oftmals in Bereichen eingesetzt, in denen auch manuelle Tätigkeiten durch Benutzer oder Bediener des Rollenförderers ausgeübt werden. Transmissionsriemen der zuvor beschriebenen Weise stellen hierbei eine Gefährdung dar, da eine Person versehentlich in den Zwischenraum zwischen zwei benachbarten Rollen im Bereich des Transmissionsriemens greifen könnte und hierbei ein oder mehrere Finger von den Transmissionsriemen erfasst und gequetscht bzw. abgerissen werden können.

Aus DE 20 2005 006 253 U1 ist ein Rollenförderer bekannt, bei dem die Förderrollen mittels einer Rollenkette gekoppelt sind, um diese anzutreiben. Die Förderrollen sind in einem Seltenprofil gehalten und die Rollenkette wird durch einen Eingriffsschutz abgedeckt, um Verletzungen an der Rollenkette zu verhindern. Der bei diesem Stand der Technik eingesetzte Eingriffsschutz besteht dabei aus einer Vielzahl von gleichartigen Modulen, die an dem Seitenprofil befestigt sind, wobei ein Modul pro Rolle vorgesehen ist. Nachteilig an dieser vorbekannten Lösung ist, dass die Module und das Seitenprofil auf einander abgestimmt sein müssen, was die Variabilität des gesamten Systems und die Anpassbarkeit an unterschiedliche Fördersituationen und- aufgaben erheblich einschränkt. Weiterhin ist nachteilhaft, dass eine Wartung der Rollenkette aufgrund deren vollständiger Abdeckung nur schwer möglich ist und auch Beschädigungszustände nicht erkannt werden können. Schließlich besteht ein weiterer Nachteil darin, dass dieser Eingriffschutz nur mit erheblichem Aufwand montiert werden kann und folglich in der gesamten Montage erheblichen Zeitraum in Anspruch nimmt.

Aus DE 42 11 874 ist eine gattungsgemäße Fördereinrichtung mit Rollenbahn bekannt, bei der eine von einem Motor angetriebene erste Rolle mehrere zweite Rollen antreibt. Zu diesem Zweck ist seitlich an der Motorrolle eine Zahnriemenscheibe vorgesehen, mittels welcher der Motor über einen Zahnriemen die erste Rolle antreibt. Von der ersten Rolle werden die weiteren Rollen mittels Rundriemen angetrieben. Zahnriemen und Rundriemen sind beide an derselben Seite der Rollen angeordnet und durch eine obere und eine untere Abdeckung gegen Eingriffe in den Innenraum geschützt.

Der Erfindung liegt die Aufgabe zugrunde, einen Rollenförderer hinsichtlich dieser Gefährdung zu verbessern und hierbei eine verbesserte Montage des Rollenförderers zu ermöglichen.

Diese Aufgabe wird erfindungsgemäß durch eine Eingriffsschutzvorrichtung gemäß Anspruch 1 gelöst.

Erfindungsgemäß wird die Gefährdung von Benutzern eines Rollenförderers in entscheidender Weise vermieden, indem die für eine Quetschung und Verletzung gefährlichen Bereiche eines Rollenförderers mittels einer Eingriffsschutzvorrichtung gesichert werden. Die Eingriffsschutzvorrichtung dient dabei dazu, zu verhindern, dass ein Finger eines Benutzers überhaupt in einen quetschgefährdenden Bereich gelangen kann. Dies wird erreicht, indem der von einem Transmissionsriemen zwischen zwei Förderrollen umschlossene Zwischenraum abgedeckt wird, wobei erfindungsgemäß zumindest durch eine Oberwand der Bereich unmittelbar unterhalb des Obertrums dieses Transmissionsriemens ausgefüllt ist, so dass ein Finger eines Benutzers nicht mehr unter diesen Obertrum gelangen kann.

Die erfindungsgemäße Lösung basiert auf der grundsätzlichen Idee, die Gesundheitsgefährdung mittels eines Eingriffsschutzes zu vermeiden. Dabei werden erfindungsgemäß weitere, entscheidende, die Funktionalität und Sicherheit der erfindungsgemäßen Lösung erzielende Lösungsmerkmale bereitgestellt. So wird durch die Bereitstellung von zwei seitlichen Befestigungsvorrichtungen an der Grundplatte die Möglichkeit geschaffen, den erfindungsgemäßen Eingriffsschutz auf den nicht rotierenden Achsen der Förderrollen zu befestigen, also den seitlichen Achsstummeln, Achsenden oder hiermit verbundenen, nicht rotierenden Elementen, wie Dichtungen oder dergleichen. Auf diese Weise wird ein Eingriffsschutz bereitgestellt, der von der Ausgestaltung des häufig variablen Seitenprofils vollkommen unabhängig montiert, gleichzeitig aber sicher im Bereich des Transmissionsriemens montiert werden kann. Die seitlichen Befestigungsvorrichtungen an der Grundplatte können zu diesem Zweck für eine form- oder kraftschlüssige Befestigung ausgebildet sein, beispielsweise indem sie eine teilweise Umgreifung der Achsstummel der Förderrollen durch eine konkave Aussenkontur ermöglichen.

Der erfindungsgemäße Eingriffsschutz weist desweiteren eine Zweiteilung in eine Grundplatte und ein Aufsteckelement auf und ermöglicht eine formschlüssige Kopplung zwischen diesen beiden Bauteilen. Durch diesen Aufbau des erfindungsgemäßen Eingriffsschutzes wird eine besonders einfache, zugleich aber schnelle Montage des Eingriffsschutzes ermöglicht. Diese Montage ist vorteilhaft zudem auch durchführbar nachdem sämtliche Förderrollen an den Seitenprofilen montiert sind und die Transmissonsriemen in der Betriebsstellung in gespannter Weise montiert sind. Die Montage der Eingriffsschutzvorrichtung kann somit als letzter Montageschritt an einem Rollenförderer durchgeführt werden und geht hierbei so vonstatten, dass zunächst die Grundplatte mittels der ersten und zweiten Befestigungsvorrichtung an den Achsstummeln der Förderrollen befestigt wird und hiernach das Aufsteckelement zwischen die Förderrollen aufgefädelt wird, aus dem Zwischenraum zwischen den Förderrollen in den Bereich, der von den Transmissionsriemen umschlungen wird, eingeführt wird und dann mit der Grundplatte mittels erster und zweiter Kopplungsvorrichtung gekoppelt wird. Diese einfache Montagemöglichkeit korrespondiert mit einer einfachen Demontagemöglichkeit, die beispielsweise zu Wartungszwecken oder für einen Tausch des Transmissionsriemens durchgeführt werden muss.

Durch diese Konstruktionsweise des erfindungsgemäßen Eingriffsschutzes wird der weitere Vorteil erreicht, dass eine Nachrüstung bestehender Rollenförderer möglich ist. Zudem eröffnet der erfindungsgemäße Eingriffsschutz die Möglichkeit, als Transmissionsriemen auch stark vorgespannte Treibriemen wie Keilrippenriemen einzusetzen, da durch die nachgeschaltete Montage das Aufziehen und Spannen solcher Treibriemen nicht durch einen Eingriffsschutz behindert wird.

Erfindungsgemäß sind die erste und zweite Befestigungsvorrichtung und die Kopplungsvorrichtungen einstückig an die Grundplatte angeformt, was in dem Sinne zu verstehen ist, dass Grundplatte und erste und zweite Befestigungsvorrichtung als ein einziges Bauteil ausgeführt sind, insbesondere als monolithisches Bauteil. Eine einstückige Anformung umfasst dabei erfindungsgemäß auch Varianten, bei denen die Befestigungsvorrichtungen aus einem anderen Material bestehen als der Rest der Grundplatte, beispielsweise können die Befestigungsvorrichtungen aus einem Federstahl bestehen, der von dem übrigen, aus Kunststoff gefertigten Teilen der Grundplatte umgossen, umspritzt oder dergleichen und dadurch mit diesen verbunden ist. Ebenso können die Befestigungsvorrichtungen und der Rest der Grundplatte im Wege einer Coextrusion aus unterschiedlichen Materialien bestehen. Vorzugsweise besteht aber die Grundplatte aus einem einzigen Werkstoff, welcher die notwendigen Materialeigenschaften für die Funktionen der Befestigungsvorrichtungen und der Kopplungsvorrichtung erfüllt.

Gemäß einer ersten bevorzugten Ausführungsform ist vorgesehen, dass das Aufsteckelement eine mit der Oberwand verbundene, beabstandet zu der Oberwand liegende Bodenwand aufweist und zwischen Bodenwand und Oberwand ein Innenraum ausgebildet ist.

Mit dieser Ausführungsform sichert das Aufsteckelement sowohl durch die Oberwand ein versehentliches Eingreifen und Erfassen von Fingern durch den Obertrum des Transmissionsriemens als auch durch die Bodenwand eine entsprechende Verletzungsgefahr durch Kontakt mit dem Untertrum des Transmissionsriemens. Mit dieser Ausgestaltung wird folglich mit einem gezielten Einsatz an Material und Abdeckungswirkung ein Eingriffsschutz erreicht, der einerseits zuverlässig wirkt, andererseits leicht zu montieren und kostengünstig zu fertigen ist.

Weiterhin ist es bevorzugt, dass das Aufsteckelement eine Frontwand aufweist, die an der Oberwand und gfs. an der Bodenwand angeformt ist und diese verbindet.

Mit dieser Ausführungsform wird das Aufsteckelement als ein im Längsschnitt nach Art eines U-Profils ausgebildetes Element gestaltet. Hierdurch wird einerseits durch die Oberwand ein versehentliches Eingreifen und Erfassen von Fingern durch den Obertrum des Transmissionsriemens verhindert und durch die Bodenwand eine entsprechende Verletzungsgefahr durch Kontakt mit dem Untertrum des Transmissionsriemens vermieden. Die Frontwand liegt hierbei vorzugsweise an der der Grundplatte gegenüberliegenden Seite und schließt dadurch den Innenraum zwischen Ober- und Bodenwand ab, wodurch eine gegen Verschmutzung weniger anfällige und leichter zu reinigende Gestaltung erzielt wird. Zudem erzielt das Aufsteckelement hierdurch eine hohe Eigenstabilität und ist unempfindlich gegenüber Verformungen oder Bruch unter Belastung.

Bevorzugt ist weiterhin vorgesehen, dass die zweite Kopplungsvorrichtung an der Oberwand angeformt ist, insbesondere kann ein erster Teil der zweiten Kopplungsvorrichtung an der Oberwand und ein zweiter Teil der der zweiten Kopplungsvorrichtung an der Bodenwand angeformt sein und weiter insbesondere kann ein erster Teil der zweiten Kopplungsvorrichtung an einem der Frontwand gegenüberliegenden Ende der Oberwand und vorzugsweise ein zweiter Teil der zweiten Kopplungsvorrichtung an einem der Frontwand gegenüberliegenden Ende der Bodenwand angeformt sein. Hierdurch bilden Grundplatte und Oberwand, gfs. weiterhin Bodenwand und gfs. Frontwand die Begrenzung eines kubusförmigen Aufsteckelements, welches eine in sich stabile Struktur bereistellt.

Dabei ist es bei Ausführungsformen mit einer Frontwand am Aufsteckelement insbesondere bevorzugt, dass die Frontwand konkav verlaufende Seitenkanten aufweist. Mit einer solchen konkaven Ausführung der Seitenkanten wird es in einfacher Weise möglich, dass Einsteckelement zwischen zwei Transportrollen einzusetzen und an die Grundplatte heranzuführen, ohne das hierbei die Gefahr besteht, dass das Einsteckelement beispielsweise durch den Rollenförderer hindurchfällt. Das Aufsteckelement ist somit als U-Profil ausgebildet, das von der Oberwand, einer Bodenwand und einer diese verbindenden Frontwand begrenzt wird, wobei die Seitenkanten der Frontwand konkav gewölbt ausgebildet sind.

Noch weiter ist es bevorzugt, dass die an der Grundplatte angeformten seitlichen Befestigungsvorrichtungen jeweils einen Kreisumfangsabschnitt ausbilden, dieser Kreisumfangsabschnitt ein erstes Ende und ein zweites Ende aufweist und dass die Grundplatte elastisch aus einer ersten Gestalt, in der die beiden ersten Enden und/oder die beiden zweiten Enden der Befestigungsvorrichtungen in einem ersten Abstand zueinander liegen, durch Krafteinwirkung in eine zweite Gestalt, in der die beiden ersten Enden und/oder die beiden zweiten Enden der Befestigungsvorrichtungen in einem zweiten Abstand, der geringer ist als der erste Abstand, zueinander liegen, verformbar ist. Mit dieser Ausgestaltung wird eine besonders vorteilhafte Funktion der Befestigungsvorrichtungen erzielt. Die Befestigungsvorrichtungen können durch elastisch reversible Verformungen zwischen zwei Gestalten einerseits im Zuge der Montage zwischen zwei Achsstummel eines Rollenförderers eingesetzt werden, wobei aus dem ersten Abstand durch Krafteinwirkung in den zweiten Abstand verformt werden, indem sie zwischen die beiden Achsen gedrückt werden können. Nach dem dies erreicht wurde, kann die Grundplatte weitergeschoben werden, woraufhin die beiden Enden wieder in den ersten Abstand zueinander elastisch rückfedern und hierdurch einen Formschluss erzielen, der die Grundplatte verankert. Grundsätzlich ist hierbei zu verstehen, dass die beiden Befestigungsvorrichtungen in einen solchen Abstand zueinander liegen können, dass sie zwischen zwei unmittelbar benachbarten Achsen in Eingriff gebracht werden können, oder dass die beiden Befestigungsvorrichtungen auch einen größeren, beispielsweise doppelt so großen oder dreimal so großen Abstand zueinander aufweisen können, um zwischen an den beiden Achsstummeln von zwei Rollen verankert zu werden, zwischen denen eine, zwei oder mehr Rollen angeordnet sind. Die elastische Verformung der Grundplatte, welche den ersten bzw. zweiten Abstand ermöglicht, kann hierbei aus einer Verformung der beiden Befestigungsvorrichtungen selbst, eines Teils der beiden Befestigungsvorrichtungen oder nur einer von beiden Befestigungsvorrichtungen heraus erfolgen. Die elastische Verformung kann aber auch bei insgesamt starren Befestigungsvorrichtungen aus einem elastisch verformbaren Abschnitt des übrigen Teil der Grundplatte erfolgen. In einer bevorzugten Ausführungsform ist vorgesehen, dass der elastisch verformbare Teil der Grundplatte durch das Aufsteckelement gegen eine elastische Verformung gesperrt ist, wenn das Aufsteckelement über die erste bzw. zweite Kopplungsvorrichtung mit der Grundplatte gekoppelt ist, sodass dann eine versehentliche Herauslösung der Grundplatte aus ihrem Formschluss zu den beiden Achsstummeln zuverlässig verhindert wird.

Weiterhin ist es bevorzugt, dass die an der Grundplatte angeformten seitlichen Befestigungsvorrichtungen jeweils einen Kreisumfangsabschnitt eines Ringes ausbilden und dieser Umfangsabschnitt ein erstes Ende aufweist, das an der Grundplatte einstückig angeformt ist und ein zweites Ende aufweist, das von der Grundplatte beabstandet ist. Mit dieser Ausführungsform wird eine besonders vorteilhafte und fertigungstechnisch günstige Ausführung der seitlichen Befestigungsvorrichtungen gelehrt, die als ein einseitig angeformter Ringabschnitt mit einem freien Ende gebildet sind. Bei dieser Ausgestaltung wird es folglich möglich, dass sich der Ringabschnitt im Bereich seiner Anformung an den Rest der Grundplatte elastisch reversibel verformt, hierdurch das freie Ende des Ringabschnittes in ausreichend hohem Maße beweglich ist und folglich der erste bzw. zweite Abstand zwischen den beiden jeweils freien Enden des Ringabschnittes erzielt werden kann.

Dabei ist es insbesondere bevorzugt, dass der Kreisumfangsabschnitt zwischen dem ersten und dem zweiten Ende von der Grundplatte beabstandet ist. Mit dieser Ausgestaltung wird ein weitestgehend freier Kreisumfangsabschnitt des Ringabschnittes definiert, der über einen großen Volumenbereich des Ringabschnittes elastisch verformbar ist und die erfindungsgemäße Wirkung für den Formschluss erzielen kann.

Bei Ausführungsformen mit Frontwand am Aufsteckelement und Kreisumfangsabschnitten bzw. Ringabschnitten als erste bzw. zweite seitliche Befestigungsvorrichtungen ist es bevorzugt, dass die konkave Wölbung der Seitenkanten der Frontwand koaxial zu dem Kreisumfangsabschnitt liegt. Diese Ausführungsform erzielt eine gute formschlüssige Sicherung der Eingriffsschutzvorrichtung im Zwischenraum zwischen Ober- und Untertrum des Transmissionsriemens.

Gemäß einer weiteren bevorzugten Ausführungsform ist vorgesehen, dass die Grundplatte zwischen der ersten und zweiten seitlichen Befestigungsvorrichtung umfasst:
- Eine Solltrennstelle, die zur irreversiblen Teilung der Grundplatte in ein linkes und ein rechtes Grundplattenteil ausgebildet ist,
- eine dritte Befestigungsvorrichtung, die zwischen der Solltrennstelle und dem ersten Ende angeordnet ist, und
- eine vierte seitliche Befestigungsvorrichtung die zwischen der Solltrennstelle und dem zweiten Ende angeordnet ist, wobei
   o die erste und dritte Befestigungsvorrichtung einstückig an dem linken Grundplattenteil angeformt sind und jeweils ein entsprechend erstes bzw. drittes elastisch reversibel verformbares Element umfassen, das gekrümmt oder abgewinkelt ausgebildet ist zum formschlüssigen Zusammenwirken mit einer runden Außenkontur,
   o die zweite und vierte Befestigungsvorrichtung einstückig an dem rechten Grundplattenteil angeformt sind und jeweils ein entsprechend zweites bzw. viertes elastisch reversibel verformbares Element umfassen, das gekrümmt oder abgewinkelt ausgebildet ist zum formschlüssigen Zusammenwirken mit einer runden Außenkontur,
- weiterhin umfassend ein linkes und ein rechtes Aufsteckelement, wobei
- eine linke erste Kopplungsvorrichtung an dem linken Grundplattenteil angeformt ist zur Verbindung des linken Grundplattenteils mit der zweiten Kopplungsvorrichtung des linken Aufsteckelements, und
- eine rechte erste Kopplungsvorrichtung an dem rechten Grundplattenteil angeformt ist zur Verbindung des rechten Grundplattenteils mit der zweiten Kopplungsvorrichtung des rechten Aufsteckelements.

Mit dieser Ausführungsform wird eine Eingriffsschutzvorrichtung bereitgestellt, die sich in besonders vorteilhafter Weise dazu eignet, um lange Förderstrecken in einem schnellen Montagevorgang gegen Verletzungsgefahr zu sichern. Die Eingriffsschutzvorrichtung zeichnet sich dabei dadurch aus, dass sie mittels ingesamt vier Befestigungsvorrichtungen an drei Achsstummeln der Förderrollen befestigt werden können, wobei die erste und zweite Befestigungsvorrichtung an den Enden der Grundplatte angeordnet sind, wohin gegen sich die dritte und vierte Befestigungsvorrichtung vorzugsweise mittig an der Grundplatte befinden und gemeinsam einen einzigen Achsstummel umgreifen, in dem die Befestigungsvorrichtungen spiegelsymmetrisch zueinander ausgebildet sind.

Erfindungsgemäß ist dabei weiterhin eine Solltrennstelle vorgesehen, entlang welcher sich die Eingriffsschutzvorrichtung mit Handkraft in zwei übereinstimmende Teile trennen lässt beispielsweise durch Materialtrennung. Dies ermöglicht es, die Eingriffsschutzvorrichtung auch dann einzusetzen, wenn lediglich der Zwischenraum zwischen zwei Förderrollen und den diese koppelnden Transmissionsriemen geschützt werden soll, indem dann nach Abtrennung eine Hälfte der Eingriffsschutzvorrichtung für diesen Zweck eingesetzt wird. Diese Hälfte trägt dann die erste und dritte oder zweite und vierte Befestigungsvorrichtung an ihren seitlichen Enden und kann zwischen zwei benachbarten Achsstummeln eingesetzt werden.

Grundsätzlich ist zu verstehen, dass sich das Prinzip dieser Eingriffsschutzvorrichtung mit Solltrennstelle in beliebiger Weise erweitern lässt, beispielsweise indem mehrere Solltrennstellen und Befestigungsvorrichtungen vorgesehen sind, um mehr als zwei, beispielsweise drei, vier oder noch mehr Transmissionsriemen mit der erfindungsgemäßen Eingriffsschutzvorrichtung zu sichern. Dabei muss nicht notwendigerweise an jedem Achsstummel, der von der Eingriffsschutzvorrichtung überdeckt wird, eine Befestigung erfolgen, sondern diese kann beispielsweise auch nur bei jedem zweiten Achsstummel oder nur bei den äußeren Achsstummeln erfolgen.

Gemäß einer weiteren bevorzugten Ausführungsform ist vorgesehen, dass
- der Abstand zwischen der ersten und der vierten Befestigungsvorrichtung dem Abstand zwischen der zweiten und der dritten Befestigungsvorrichtung entspricht und
- der Abstand zwischen der ersten und der dritten Befestigungsvorrichtung dem Abstand zwischen der zweiten und der vierten Befestigungsvorrichtung entspricht.

Mit dieser Ausgestaltung wird eine in zweierlei Hinsicht symmetrische Gestaltung der Grundplatte der Eingriffsschutzvorrichtung bereitgestellt, die sicherstellt, dass sich die Eingriffsschutzvorrichtung ausgehend von einer mittleren Förderrolle auf hierzu zwei benachbarten Förderrollen einsetzen lässt und dann den Zwischenraum zwischen jeweils zwei benachbarten Transmissionsriemen gegen Verletzungen sichert.

Eine bevorzugte Ausführungsform der Erfindung wird anhand der beiliegenden Figuren erläutert. Es zeigen:
Figur 1 eine perspektivische Ansicht eines Ausschnittes einer Rollenförderbahn mit eingesetztem Eingriffsschutz,
Figur 2 eine Frontalansicht einer Grundplatte einer bevorzugten Ausführungsform des erfindungsgemäßen Eingriffsschutzes,
Figur 3 einen Schnitt entlang der Linie A-A in Figur 2,
Figur 4 eine Rückansicht eines Einsteckelementes einer bevorzugten Ausführungsform der Erfindung,
Figur 5 einen Schnitt entlang der Linie B-B in Figur 4, und
Figur 6 einen Schnitt entlang der Line A-A in Figur 4.

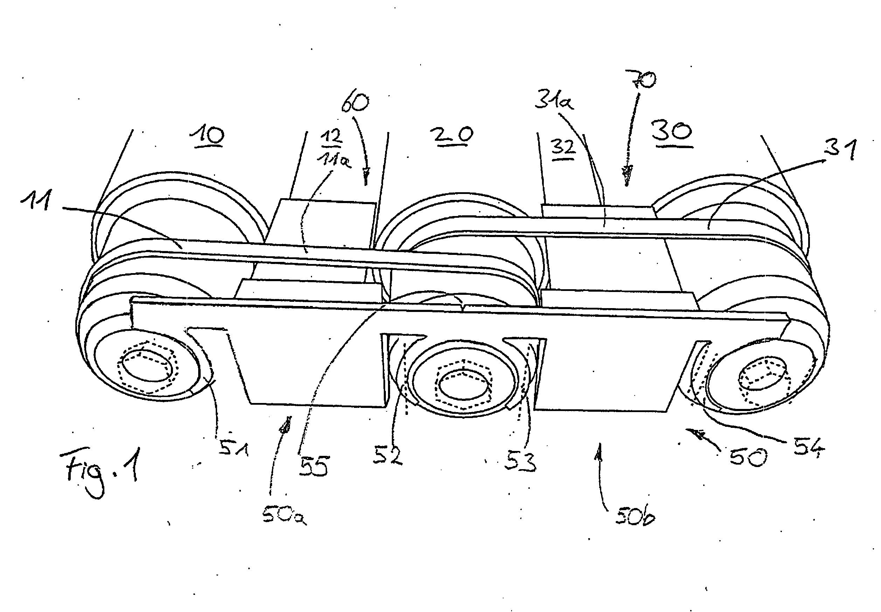

Bezugnehmend zunächst auf Figur 1 ist ein Ausschnitt einer Rollenförderbahn gezeigt, der insgesamt drei Förderrollen 10, 20, 30 umfasst. Bei der Förderrolle 20 handelt es sich um eine motorgetriebene Förderrolle, die Rotation der motorgetriebenen Förderrolle wird an einem Ende der Förderrolle mittels eines ersten Transmissionsriemens 31 auf die benachbart rechts liegende Förderrolle 30 übertragen, weiterhin wird die Rotation der Motorrolle über einen zweiten Transmissionsriemen 11 auf eine benachbarte links liegende Förderrolle 10 übertragen.

Die Transmissionsriemen 11, 31 sind straff gespannt und umschlingen den Übertragungsbereich am Rand der Förderrollen um jeweils 180°. In diesem Übertragungsbereich sind die Förderrollen mit einem entsprechend in Querschnitt v-förmigen, umlaufenden Nutprofil versehen, um den Transmissionsriemen sicher zu greifen und zu führen. Der Transmissionsriemen kann beispielsweise als Zweifach- oder Mehrfachrippenriemen ausgeführt sein.

Zwischen den Enden der Förderrollen und im Zwischenraum zwischen Obertrum 11a bzw. 31 a und Untertrum ( nicht sichtbar) der Transmissionsriemen 11, 31 ist ein Eingriffsschutz angeordnet. Der Eingriffsschutz umfasst eine Grundplatte 50, die mittels Befestigungsvorrichtung 51-54 an die Achsstummel bzw. ein nicht rotierendes Achselement oder dergleichen der Förderrollen angesetzt und formschlüssig daran befestigt ist. Weiterhin umfasst der Eingriffsschutz zwei Einsteckelemente 60, 70, die aus dem Zwischenraum 12, 32 zwischen zwei Förderrollen in den Bereich zwischen Ober- und Untertrum der Transmissionsriemen 10, 30 eingeführt und formschlüssig mit der Grundplatte gekoppelt sind.

Die Grundplatte weist weiterhin mittig im Bereich oberhalb der Befestigungsvorrichtungen 52, 53 eine Solltrennstelle 55 auf, entlang welcher die Grundplatte in zwei übereinstimmende Grundplattenteile 50a, 50b aufgetrennt werden kann.

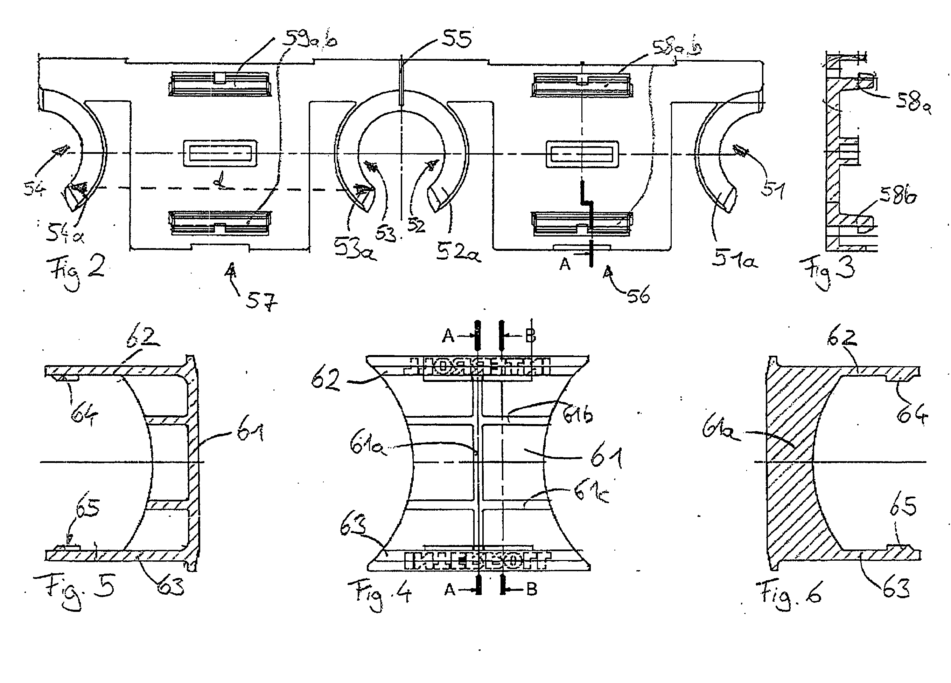

Figur 2 zeigt eine Draufsicht auf die Grundplatte von der zu den Einsteckelementen 60, 70 weisende Seite. Zu erkennen ist, dass die Befestigungsvorrichtungen 51-54 als Kreisumfangsabschnitt ausgebildet sind, der sich ringförmig um etwa 150° erstreckt, ausgehend von einer oberen Befestigungsstelle, an welcher der somit gebildete Ringabschnitt einstückig mit dem Rest der Grundplatte verbunden ist. Das freie Ende 51a-54a des Ringabschnittes kann sich folglich radial nach außen verformen, so dass der Abstand d zwischen zwei freien Enden 51a, 52a bzw. 51a, 54a durch diese elastische Verformung sich verringert. Hierdurch wird es möglich, die Grundplatte auf einen Achsstummel aufzusetzen, dessen Außendurchmesser etwa dem Innendurchmesser des durch den Ringabschnitt definierten Vollkreises entspricht und einen Formschluss mit diesem Achsstummel zu erzielen.

Zwischen den Befestigungsvorrichtungen 51, 52 bzw. den Befestigungsvorrichtungen 53, 54 ist ein Grundplattenabschnitt 56 bzw. 57 ausgebildet, der über eine am oberen Rand der Grundplatte verlaufenden Steg mit dem Befestigungsvorrichtungen 51-54 verbunden ist. An den Grundplattenabschnitten 56, 57 sind Kopplungsvorrichtungen 58a, b und 59a, b angeordnet, die wie aus Figur 3 ersichtlich, als elastisch verformbare Schnapphaken ausgebildet sind. Die Kopplungsvorrichtungen 58a, b, 59a, b wirken mit den korrespondierend hierzu ausgebildeten Kopplungsvorrichtungen der Einsteckelemente zusammen, wie nachfolgend näher erläutert.

Weiterhin ist mittig in dem Bereich des oberen Steges der Grundplatte eine Kerbe 55 angeordnet, die als Solltrennstelle dient. Entlang dieser Kerbe kann die in Figur 2 ausgebildete Grundplatte in zwei gleiche Hälften aufgeteilt werden, die sich zur Sicherung jeweils eines einzelnen Transmissionsriemen eignen.

Das in den Figuren 4-6 gezeigte Einsteckelement umfasst eine Rückwand 61, eine Oberwand 62 und eine Bodenwand 63. An der Oberwand 62 und der Bodenwand 63 sind jeweils als Schnapphaken ausgebildete Kopplungsvorrichtungen 64, 65 ausgebildet. Durch elastische Verformung der Oberwand und der Bodenwand können diese Kopplungsvorrichtungen 64, 65 mit den Kopplungsvorrichtungen der Grundplatte in Eingriff und Formschluss gebracht werden, um das Einsteckelement 60 an der Grundplatte zu befestigen.

Die Rückwand 61 des Einsteckelementes ist einerseits an beiden äußeren Seitenkanten konkav nach innen gewölbt, wodurch sich das Einsteckelement leicht zwischen zwei Rollen einfädeln und in den Zwischenraum zwischen Ober- und Untertrum des Transmissionsriemen einführen lässt. Die Rückwand ist weiterhin mittels drei Rippen 61 a-c verstärkt, um dem Einsteckelement eine ausreichende Strukturfestigkeit zu verleihen.

Die Form und Gestaltung von sowohl Einsteckelement als auch Grundplatte sind in solcher Art ausgeführt, dass diese Bauteile im Spritzgussverfahren hergestellt werden können, um folglich eine effiziente Herstellung aus einem belastbaren und kostengünstigen Kunststoff, beispielsweise Polyamid, ermöglichen.

## Patentansprüche

1. Eingriffsschutzvorrichtung zur Positionierung zwischen dem Ober- und Untertrum eines Treibriemens für Transportrollen eines Rollenförderers,
**gekennzeichnet durch**
a) eine Grundplatte (50) mit
- einer ersten seltlichen Befestigungsvorrichtung (51)an einem ersten Ende und
- einer zweiten seltlichen Befestigungsvorrichtung (54) an einem dem ersten Ende gegenüberliegenden zweiten Ende, zum Befestigen auf den nicht rotierenden Achsen der Förderrollen, also den seltlichen Achsstummeln, Achsenden oder hiermit verbundenen, nicht rotierenden Elementen, wie Dichtungen oder dergleichen,
o wobei die erste und zweite Befestigungsvorrichtung einstückig an die Grundplatte angeformt sind und jeweils ein entsprechend erstes bzw. zweites elastisch reversibel verformbares Element umfassen, das gekrümmt ober abgewinkelt ausgebildet ist zum formschlüssigen Zusammenwirken mit einer runden Außenkontur,
- einer ersten Kopplungsvorrichtung (58a, b; 59a, b), die an einer zwischen dem ersten und zweiten Ende ausgebildeten Fläche der Grundplatte einstückig angeformt ist,
b) ein Aufsteckelement (60; 70), zum Einführen aus dem Zwischenraum (12, 32) zwischen zwei Forderrollen in den Bereich, der von dem Treibriemen umschlungen wird, mit
- einer Oberwand (62),
- einer zweiten Kopplungsvorrichtung (64) zur formschlüssigen Kopplung mit der ersten Kopplungsvorrichtung.

2. Eingriffsschutzvorrichtung nach Anspruch 1,
**dadurch gekennzeichnet, dass** das Aufsteckelement eine mit der Oberwand verbundene, beabstandet zu der Oberwand liegende Bodenwand (63) aufweist und zwischen Bodenwand und Oberwand ein Innenraum ausgebildet ist.

3. Eingriffsschutzvorrichtung nach Anspruch 1 oder 2,
**dadurch gekennzeichnet, dass** das Aufsteckelement eine Frontwand (61) aufweist, die an der Oberwand und gfs. an der Bodenwand angeformt ist und diese verbindet.

4. Eingrfffsschutzvorrichtung nach einem der vorhergehenden Ansprüche,
**dadurch gekennzeichnet, dass** die zweite Kopplungsvorrichtung (64) an der Oberwand angeformt ist.

5. Eingriffsschutzvorrichtung nach Anspruch 2,
**dadurch gekennzeichnet, dass** ein erster Teil (64) der zweiten Kopplungsvorrichtung an der Oberwand und ein zweiter Teil (65) der zweiten Kopplungsvorrichtung an der Bodenwand angeformt ist.

6. Eingriffsschutzvorrichtung nach Anspruch 3,
**dadurch gekennzeichnet, dass** ein erster Teil (64) der zweiten Kopplungsvorrichtung an einem der Frontwand gegenüberliegenden Ende der Oberwand und vorzugsweise ein zweiter Teil (65) der zweiten Kopplungsvorrichtung an einem der Frontwand gegenüberliegenden Ende der Bodenwand angeformt ist.

7. Eingriffsschutzvorrichtung nach einem der vorhergehenden Ansprüche,
**dadurch gekennzeichnet, dass** die an der Grundplatte angeformten seltlichen Befestigungsvorrichtungen jeweils einen Kreisumfangsabschnitt ausbilden, dieser Kreisumfangsabschnitt ein erstes Ende und ein zweites Ende (51 a, 54a) aufweist und dass die Grundplatte elastisch aus einer ersten Gestalt, in der die beiden ersten Enden und/oder die beiden zweiten Enden der Befestigungsvorrichtungen in einem ersten Abstand zueinander liegen, durch Krafteinwirkung in eine zweite Gestalt, in der die beiden ersten Enden und/oder die beiden zweiten Enden der Befestigungsvorrichtungen in einem zweiten Abstand, der geringer ist als der erste Abstand, zueinander liegen, verformbar ist.

8. Eingriffsschutzvorrichtung nach einem der vorhergehenden Ansprüche,
**dadurch gekennzeichnet, dass** die an der Grundplatte angeformten seltlichen Befestigungsvorrichtungen jeweils einen Kreisumfangsabschnitt eines Ringes ausbilden und dieser Umfangsabschnitt ein erstes Ende aufweist, das an der Grundplatte einstückig angeformt ist und ein zweites Ende (51a, 54a) aufweist, das freistehend an der Grundplatte angeordnet ist.

9. Eingriffsschutzvorrichtung nach Anspruch 8,
**dadurch gekennzeichnet, dass** der Kreisumfangsabschnitt zwischen dem ersten und dem zweiten Ende freistehend an der Grundplatte angeordnet ist.

10. Eingriffsschutzvorrichtung nach einem Anspruch 3 oder 6,
**dadurch gekennzeichnet, dass** die Frontwand (61) konkav verlaufende Seitenkanten aufweist.

11. Eingriffsschutzvorrichtung nach Anspruch 10 und und einem der Ansprüche 7-9,
**dadurch gekennzeichnet, dass** die konkave Wölbung der Seitenkanten der Frontwand koaxial zu dem Kreisumfangsabschnitt liegt.

12. Eingriffsschutzvorrichtung nach einem der vorhergehenden Ansprüche,
**dadurch gekennzeichnet, dass** die Grundplatte zwischen der ersten und zweiten seitlichen Befestigungsvorrichtung umfasst:
- Eine Solltrennsteile (55), die zur irreversiblen Teilung der Grundplatte in ein linkes (56) und ein rechtes (57) Grundplattenteil ausgebildet ist,
- eine dritte seitliche Befestigungsvorrichtung (52), die zwischen der Solltrennstelle und dem ersten Ende angeordnet ist, und
- eine vierte seitliche Befestigungsvorrichtung (53), die zwischen der Solltrennstelle und dem zweiten Ende angeordnet ist, wobei
o die erste und dritte Befestigungsvorrichtung (51, 52) einstückig an dem linken Grundplattenteil (56) angeformt sind und jeweils ein entsprechend erstes bzw. drittes elastisch reversibel verformbares Element umfassen, das gekrümmt oder abgewinkelt ausgebildet ist zum formschlüssigen Zusammenwirken mit einer runden Außenkontur,
o die zweite und vierte Befestigungsvorrichtung (53, 54) einstückig an dem rechten Grundplattenteil (57) angeformt sind und jeweils ein entsprechend zweites bzw. viertes elastisch reversibel verformbares Element umfassen, das gekrümmt oder abgewinkelt ausgebildet ist zum formschlüssigen Zusammenwirken mit einer runden Außenkontur,
- weiterhin umfassend ein linkes (60) und ein rechtes (70) Aufsteckelement, wobei
- eine linke erste Kopplungsvorrichtung an dem linken Grundplattenteil angeformt ist zur Verbindung des linken Grundplattenteils mit der zweiten Kopplungsvorrichtung des linken Aufsteckelements, und
- eine rechte erste Kopplungsvorrichtung an dem rechten Grundplattenteil angeformt ist zur Verbindung des rechten Grundplattenteils mit der zweiten Kopplungsvorrichtung des rechten Aufsteckelements.

13. Eingriffsschutzvorrichtung nach Anspruch 12,
**dadurch gekennzeichnet, dass**
- der Abstand zwischen der ersten und der vierten Befestigungsvorrichtung dem Abstand zwischen der zweiten und der dritten Befestigungsvorrichtung entspricht und
- der Abstand zwischen der ersten und der dritten Befestigungsvorrichtung dem Abstand zwischen der zweiten und der vierten Befestigungsvorrichtung entspricht.

## Claims

1. Interference prevention device for positioning between the upper and lower runs of a driving belt for conveyor rollers of a roller conveyor, **characterised by**
a) a base plate (50) having
- a first lateral fixing device (51) on a first end and
- a second lateral fixing device (54) on a second end opposite the first end for fixing onto the non-rotating shafts of the conveyor rollers, i.e. the lateral stub shafts, shaft ends or hereby connected non-rotating elements, such as seals or suchlike,
• wherein the first and second fixing devices are integrally formed onto the base plate and in each case comprise a corresponding first or second elastically reversibly deformable element which is curved or angled to interact in a form-fit manner with a round outer contour,
- a first coupling device (58a, b; 59a, b) which is integrally formed onto a surface of the base plate formed between the first and second ends,
b) a plug-in element (60; 70), for inserting from the gap (12, 32) between two conveyor rollers into the area which is looped around by the driving belt, having
- an upper wall (62) and
- a second coupling device (64) for coupling in a form-fit manner to the first coupling device.

2. Interference prevention device according to Claim 1, **characterised in that** the plug-in element has a bottom wall (63), which is connected to the upper wall and spaced apart from the upper wall, and an interior space is formed between the bottom wall and the upper wall.

3. Interference prevention device according to Claim 1 or 2, **characterised in that** the plug-in element has a front wall (61) which is formed onto the upper wall and if required is formed onto the bottom wall and connects them.

4. Interference prevention device according to any one of the preceding claims, **characterised in that** the second coupling device (64) is formed onto the upper wall.

5. Interference prevention device according to Claim 2, **characterised in that** a first part (64) of the second coupling device is formed onto the upper wall and a second part (65) of the second coupling device is formed onto the bottom wall.

6. Interference prevention device according to Claim 3, **characterised in that** a first part (64) of the second coupling device is formed onto an end of the upper wall which is opposite the front wall and preferably a second part (65) of the second coupling device is formed onto an end of the bottom wall which is opposite the front wall.

7. Interference prevention device according to any one of the preceding claims, **characterised in that** the lateral fixing devices formed onto the base plate in each case form a circular circumference section, this circular circumference section has a first end and a second end (51 a, 54a), and **in that** the base plate can be elastically deformed by application of a force from a first shape, in which the two first ends and/or the two second ends of the fixing devices are at a first distance from one another, into a second shape, in which the two first ends and/or the two second ends of the fixing devices are at a second distance from one another which is less than the first distance.

8. Interference prevention device according to any one of the preceding claims, **characterised in that** the lateral fixing devices formed onto the base plate in each case form a circular circumference section of a ring and this circumference section has a first end which is integrally formed onto the base plate and a second end (51 a, 54a) which is arranged free-standing on the base plate.

9. Interference prevention device according to Claim 8, **characterised in that** the circular circumference section between the first end and the second end is arranged free-standing on the base plate.

10. Interference prevention device according to Claim 3 or 6, **characterised in that** the front wall (61) has lateral edges which run concavely.

11. Interference prevention device according to Claim 10 and any one of Claims 7-9, **characterised in that** the concave curvature of the lateral edges of the front wall is coaxial to the circular circumference section.

12. Interference prevention device according to any one of the preceding claims, **characterised in that** the base plate comprises between the first and second lateral fixing devices:
- a predetermined separation point (55) which is formed to irreversibly divide the base plate into a left (56) and a right (57) base plate part,
- a third lateral fixing device (52) which is arranged between the predetermined separation point and the first end and
- a fourth lateral fixing device (53) which is arranged between the predetermined separation point and the second end, wherein
• the first and third fixing devices (51, 52) are integrally formed onto the left base plate part (56) and in each case comprise a corresponding first or third elastically reversibly deformable element which is curved or angled to interact in a form-fit manner with a round outer contour,
• the second and fourth fixing devices (53, 54) are integrally formed onto the right base plate part (57) and in each case comprise a corresponding second or fourth elastically reversibly deformable element which is curved or angled to interact in a form-fit manner with a round outer contour,
- and further comprising a left (60) and a right (70) plug-in element, wherein
- a left first coupling device is formed onto the left base plate part to connect the left base plate part to the second coupling device of the left plug-in element and
- a right first coupling device is formed onto the right base plate part to connect the right base plate part to the second coupling device of the right plug-in element.

13. Interference prevention device according to Claim 12, **characterised in that**
- the distance between the first and the fourth fixing devices corresponds to the distance between the second and the third fixing devices and
- the distance between the first and the third fixing devices corresponds to the distance between the second and the fourth fixing devices.

## Revendications

1. Dispositif de protection pour le positionnement entre le brin supérieur et le brin inférieur d'une courroie d'entraînement pour des rouleaux de transport d'un convoyeur à rouleaux,
**caractérisé par**
a) une plaque de base (50) comportant
- un premier dispositif de fixation latéral (51) à une première extrémité et
- un deuxième dispositif de fixation latéral (54) à une deuxième extrémité opposée à la première extrémité, servant à la fixation sur les axes non tournants des rouleaux du convoyeur, c'est-à-dire sur les tourillons latéraux, sur les extrémités d'axe ou sur des éléments non tournants, reliés avec ceux-ci, comme des joints ou des pièces similaires,
o les premier et deuxième dispositifs de fixation formant une seule pièce avec la plaque de base et comportant chacun un dit premier respectivement un dit deuxième élément déformable de manière élastique et réversible qui a reçu une forme courbée ou coudée en vue d'une action conjointe par complémentarité de forme avec un contour externe rond,
- un premier dispositif de couplage (58a, b; 59e, b) qui forme une seule pièce avec une surface formée entre les première et deuxième extrémités de la plaque de base,
b) un élément enfichable (60; 70) en vue de l'introduction depuis l'espace intermédiaire (12, 32) entre deux rouleaux du convoyeur dans la zone qui est entourée par la courroie d'entraînement, comportant
- une paroi supérieure (62),
- un deuxième dispositif de couplage (64) en vue du couplage par complémentarité de forme avec le premier dispositif de couplage.

2. Dispositif de protection selon la revendication 1,
**caractérisé en ce que** l'élément enfichable comporte une paroi inférieure (63) reliée à la paroi supérieure et écartée de la paroi supérieure et **en ce qu'**un espace interne est formé entre la paroi inférieure et la paroi supérieure.

3. Dispositif de protection selon la revendication 1 ou 2,
**caractérisé en ce que** l'élément enfichable comporte une paroi frontale (61) qui est formée sur la paroi supérieure et, le cas échéant, sur la paroi inférieure et qui relie celles-ci.

4. Dispositif de protection selon l'une quelconque des revendications précédentes,
**caractérisé en ce que** le deuxième dispositif de couplage (64) est formé sur la paroi supérieure.

5. Dispositif de protection selon la revendication 2,
**caractérisé en ce qu'**une première pièce (64) du deuxième dispositif de couplage est formée sur la paroi supérieure et qu'une deuxième pièce (65) du deuxième dispositif de couplage est formée sur la paroi inférieure.

6. Dispositif de protection selon la revendication 3,
**caractérisé en ce qu'**une première pièce (64) du deuxième dispositif de couplage est formée sur une extrémité de la paroi supérieure opposée à la paroi frontale et que, de préférence, une deuxième pièce (65) du deuxième dispositif de couplage est formée sur une extrémité de la paroi inférieure opposée à la paroi frontale.

7. Dispositif de protection selon l'une quelconque des revendications précédentes, **caractérisé en ce que** les dispositifs de fixation latéraux formés sur la plaque de base forment chacun un secteur de circonférence qui comporte une première et une deuxième extrémité (51a, 54a)
et **en ce que** la plaque de base est déformable de manière élastique sous l'effet d'une force entre une première forme, dans laquelle les deux premières extrémités et/ou les deux deuxièmes extrémités des dispositifs de fixation sont disposées à une première distance l'une de l'autre, et une deuxième forme dans laquelle les deux premières extrémités et/ou les deux deuxièmes extrémités des dispositifs de fixation sont disposées à une deuxième distance l'une de l'autre qui est inférieure à la première distance.

8. Dispositif de protection selon l'une quelconque des revendications précédentes, **caractérisé en ce que** les dispositifs de fixation latéraux formés sur la plaque de base forment chacun un secteur de circonférence d'un anneau et ce secteur de circonférence comporte une première extrémité, qui forme une seule pièce avec la plaque de base, et une deuxième extrémité (51a, 54a) qui est disposée librement sur la plaque de base.

9. Dispositif de protection selon la revendication 8,
**caractérisé en ce que** le secteur de circonférence est disposé librement entre la première et la deuxième extrémité sur la plaque de base.

10. Dispositif de protection selon la revendication 3 ou 6,
**caractérisé en ce que** la paroi frontale (61) comporte des bords latéraux ayant une forme concave.

11. Dispositif de protection selon la revendication 10 et une des revendications 7 à 9, **caractérisé en ce que** la cambrure concave des bords latéraux de la paroi frontale est située de manière coaxiale par rapport au secteur de circonférence.

12. Dispositif de protection selon l'une quelconque des revendications précédentes, **caractérisé en ce que** la plaque de base comporte entre les premier et deuxième dispositifs de fixation latéraux :
- une ligne prévue de séparation (55) qui est formée en vue d'une séparation irréversible de la plaque de base en une partie de plaque de base gauche (56) et une partie de plaque de base droite (57),
- un troisième dispositif de fixation latéral (52) qui est disposé entre la ligne prévue de séparation et la première extrémité, et
- un quatrième dispositif de fixation latéral (53), qui est disposé entre la ligne prévue de séparation et la deuxième extrémité, dans lequel
o le premier et le troisième dispositifs de fixation (51, 52) formant une seule pièce avec la partie de plaque de base gauche (56) et comportant chacun un dit premier respectivement un dit troisième élément déformable de manière élastique et réversible qui a reçu une forme courbée ou coudée en vue d'une action conjointe par complémentarité de forme avec un contour externe rond,
o le deuxième et le quatrième dispositifs de fixation (53, 54) formant une seule pièce avec la partie de plaque de base droite (57) et comportant chacun un dit deuxième respectivement un dit quatrième élément déformable de manière élastique et réversible qui a reçu une forme courbée ou coudée en vue d'une action conjointe par complémentarité de forme avec un contour externe rond,
- comportant en outre un élément enfichable gauche (60) et un élément enfichable droit (70), dans lequel
- un premier dispositif de couplage gauche étant formé sur la partie de plaque de base gauche en vie de la liaison de la partie de plaque de base gauche avec le deuxième dispositif de couplage de l'élément enfichable gauche, et
- un premier dispositif de couplage droit étant formé sur la partie de plaque de base droite en vue de la liaison de la partie de plaque de base droite avec le deuxième dispositif de couplage de l'élément enfichable droit.

13. Dispositif de protection selon la revendication 12,
**caractérisé en ce que**
- la distance entre le premier et le quatrième dispositif de fixation correspond à la distance entre le deuxième et le troisième dispositif de fixation et
- la distance entre le premier et le troisième dispositif de fixation correspond à la distance entre le deuxième et le quatrième dispositif de fixation.
